# EUROPEAN PATENT SPECIFICATION

(11) **EP 2 649 915 B1**
(45) Date of publication and mention of the grant of the patent: **14.01.2015**
(21) Application number: 13163608.6
(22) Date of filing: 12.04.2013
(51) Int. Cl.: A47J 31/42, A47J 42/50

(54) **Coffee beverage vending machine**
Kaffeegetränkeverkaufsautomat
Distributeur de boissons au café

(30) Priority: 12.04.2012 IT TO20120319
(43) Date of publication of application: 16.10.2013
(73) Proprietor: N&W Global Vending S.p.A., Valbrembo (IT)
(72) Inventor: Facoetti, Filippo, 24044 Dalmine (IT)
(74) Representative: Boggio, Luigi

(56) References cited:
- DE-U1- 20 300 928
- DE-U1-202009 005 115
- US-A- 4 789 106
- US-A1- 2004 123 747
- US-A1- 2007 257 142

## Description

The present invention relates to a coffee beverage vending machine.

More specifically, the present invention relates to a coffee beverage vending machine of the type comprising an outer casing with an access opening; and a coffee grinding device and coffee bean container fitted to the casing; the grinding device being housed in a fixed position inside the casing and having a top coffee bean inlet; and the coffee bean container comprising a bottom feed conduit for feeding coffee beans to said inlet, and at least one top loading opening. The document DE-202009 005 115 U1 discloses a coffee machine with a grinding device and a coffee bean container.

The coffee bean container of known vending machines of the above type is usually located inside the outer casing, in a position that is not only hard to reach but also relatively high, to allow the coffee beans to drop by force of gravity from the container to the grinding device.

As a result, loading the coffee beans into the container through the top loading opening, as well as routine cleaning and maintenance of the container usually pose difficulties.

It is an object of the present invention to provide a coffee vending machine designed to reduce the above problems to an acceptable level.

According to the present invention, there is provided a coffee beverage vending machine as claimed in Claim 1 and preferably in any one of the Claims depending directly or indirectly on Claim 1.

A non-limiting embodiment of the invention will be described by way of example with reference to the attached drawings, in which :
Figure 1 shows a partial view in perspective of a preferred embodiment of the coffee vending machine according to the present invention;

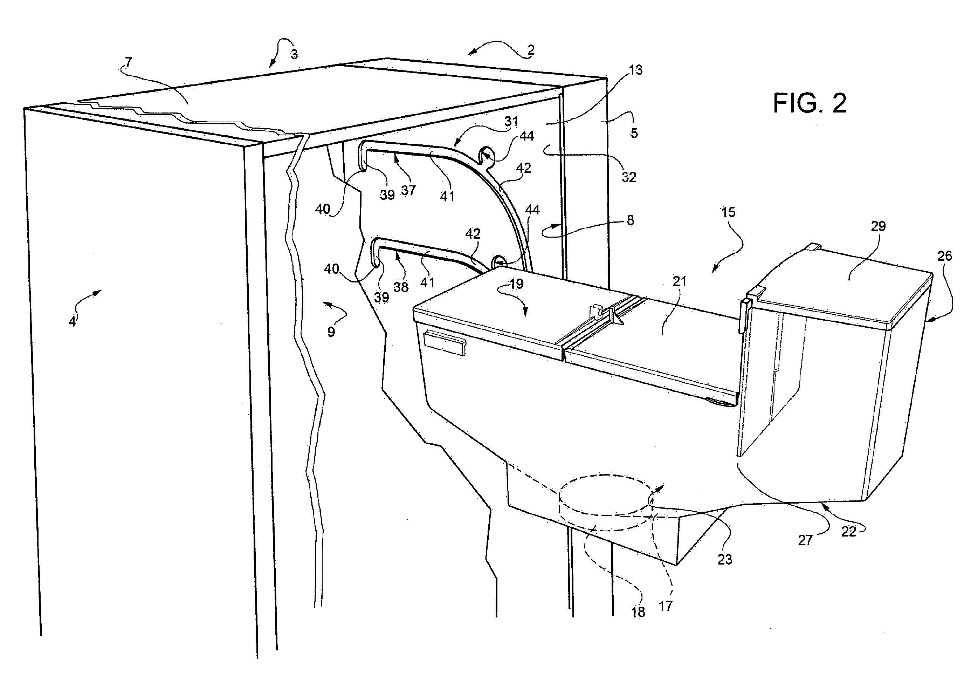

Figure 2 shows a partial, exploded view in perspective of the Figure 1 vending machine;
Figures 3 to 6 show partial side views, with parts removed for clarity and parts indicated by dash lines, showing the Figure 1 vending machine in respective operating positions;
Figure 7 shows a section along line VII-VII in Figure 5.

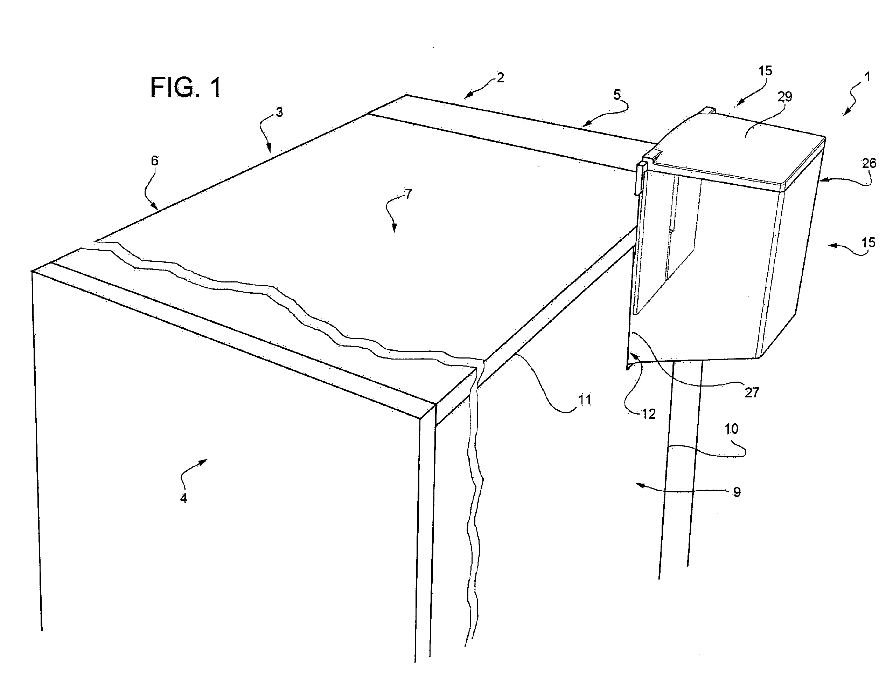

Number 1 in Figure 1 indicates as a whole a coffee beverage vending machine comprising a casing or cabinet 2, a concave rear portion 3 of which is bounded laterally by two parallel, vertical, lateral box walls 4 and 5, and by a vertical rear wall 6 perpendicular to lateral walls 4 and 5, and is bounded at the top by a horizontal top wall 7.

At the front, rear portion 3 has an opening 8 extending between lateral walls 4 and 5 and top wall 7, and closed by a door 9, which is hinged to wall 4 to rotate, about a vertical hinge (not shown) perpendicular to top wall 7, to and from a closed position, in which door 9 is parallel to rear wall 6 and has a free lateral edge 10 contacting lateral wall 5, and a free top edge 11 contacting top wall 7.

At the intersection of free edges 10 and 11, door 9 has a recess 12 for the purpose explained below. Lateral walls 4 and 5, rear wall 6, top wall 7, and door 9, when closed, define a substantially rectangular-parallelepiped-shaped chamber 13 housing a known coffee grinding device 14 and a coffee bean container 15, both fitted to casing 2.

Grinding device 14 is housed in a fixed position inside chamber 13, and has a top coffee bean inlet 16. And container 15 comprises a bottom funnel 17 terminating in a feed conduit 18 for feeding coffee beans to inlet 16; a top wall 19 having a top loading opening 20 closed by a lid 21; and a lateral wall 22 connecting top wall 19 and funnel 17, and comprising two flat portions 23 and 24 parallel to lateral walls 4 and 5, and of which portion 23 faces lateral wall 4, and portion 24 faces and is adjacent to lateral wall 5.

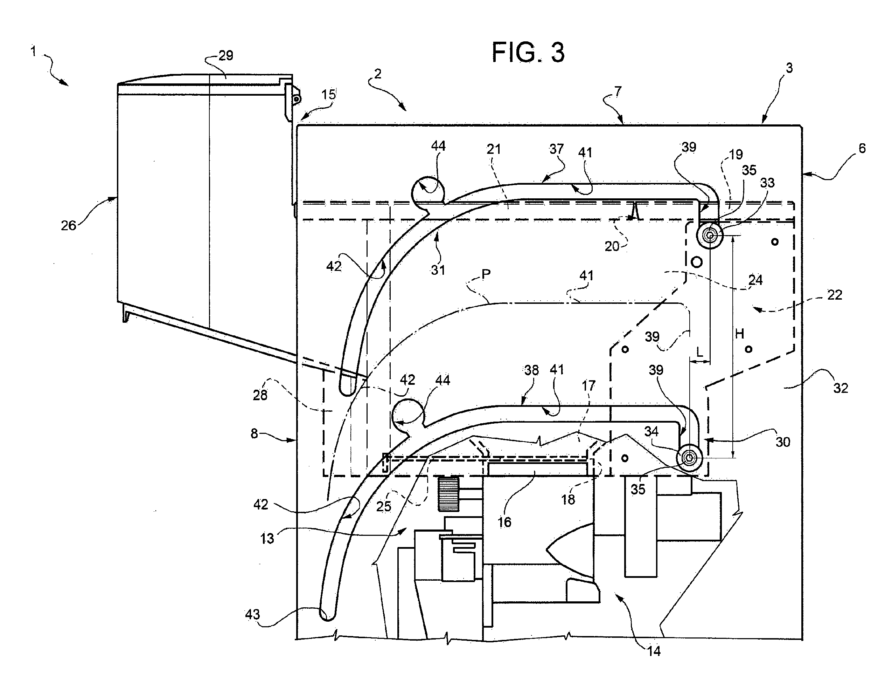

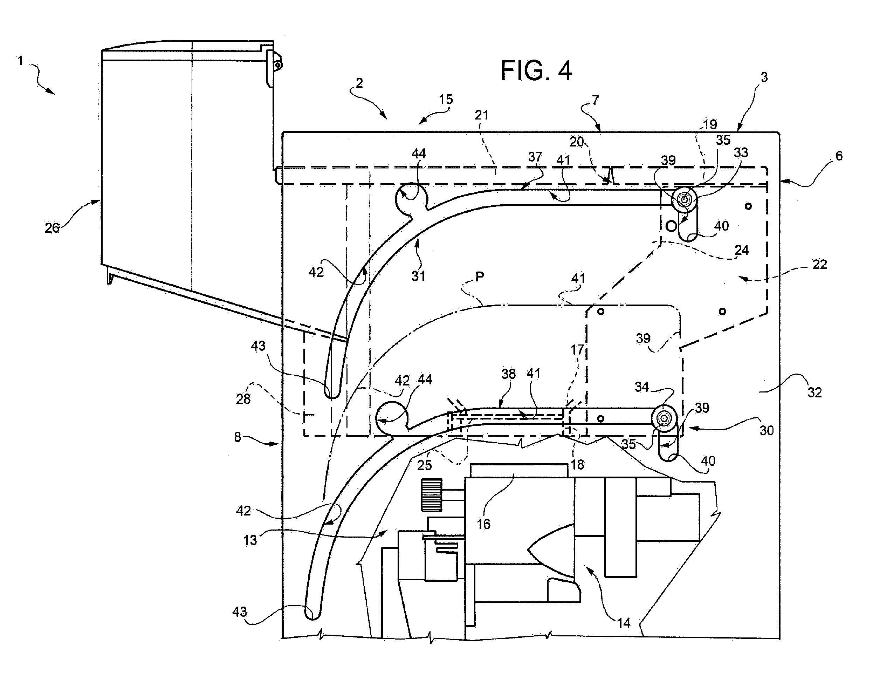

Feed conduit 18 is controlled by a valve device defined, in the embodiment shown, by a horizontal shutter 25 fitted across feed conduit 18 and movable manually between a closed position (Figures 4-6) closing feed conduit 18, and a normal open position (Figure 3) opening feed conduit 18.

In the embodiment shown, container 15 comprises a cup-shaped auxiliary container 26 (optional), which is connected laterally by an inclined tubular appendix 27 to a front portion 28 of lateral wall 22, is made at least partly of transparent material, and has a top end located above the top end of lateral wall 22 and closed by a lid 29.

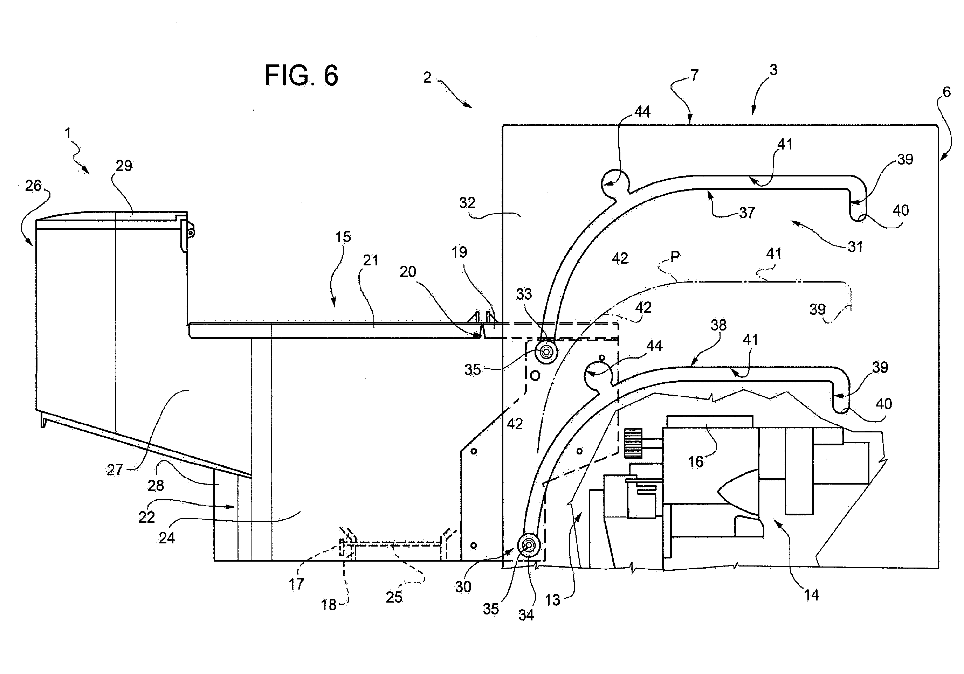

Container 15 is connected to and projects from lateral wall 5 by means of a coupling device 30 interposed between lateral wall 5 and flat portion 24 of lateral wall 22, and is mounted to slide through opening 8 - remaining horizontal at all times and along a downward-curving path P defined by a guide device 31 formed in an inner plate 32 on lateral wall 5 - between a raised work position (Figure 3), in which feed conduit 18 is connected coaxially to inlet 16 of grinding device 14, tubular appendix 27 engages recess 12 in door 9 (if there is no auxiliary container 26 or tubular appendix 27, there is no recess 12 either), and auxiliary container 26 is located outside door 9 in the closed position; and a lowered loading and/or maintenance position (Figure 6) that can only be reached with door 9 open, and in which container 15 projects almost entirely outwards of rear portion 3, through opening 8.

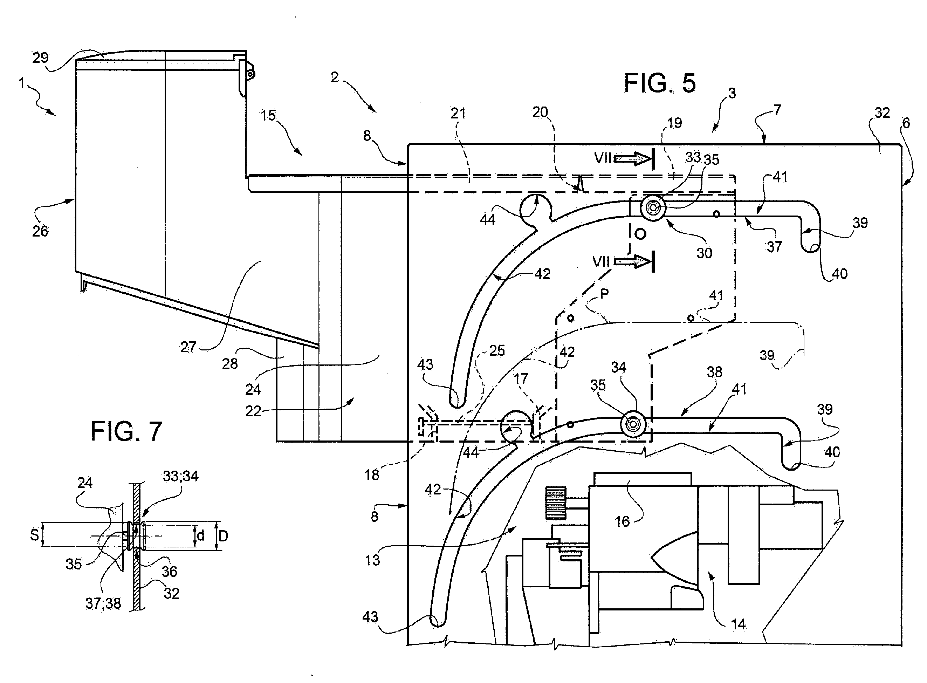

Coupling device 30 comprises two wheels 33 and 34 mounted idly on respective horizontal pins 35 integral with a rear portion of flat portion 24, perpendicular to flat portion 24, and crosswise to path P. As shown in Figures 3 to 6, wheel 33 is located above wheel 34, at a distance H measured by projecting wheel 33 in a vertical plane through the axis of wheel 34, and is set back with respect to wheel 34 by a distance L measured in the same vertical plane through the axis of wheel 34. As shown in Figure 7, each wheel 33, 34 has an outside diameter D, and an intermediate annular groove 36 of diameter d smaller than diameter D.

Guide device 31 comprises two slots 37 and 38 formed in inner plate 32 and of constant width S greater than d and less than D. More specifically, wheel 33 transversely engages and rolls along slot 37, and wheel 34 transversely engages and rolls along slot 38.

Slots 37 and 38 are the same shape. More specifically, if, for the sake of simplicity, one of slots 37, 38 is referred to as the 'first slot' and the other as the 'second slot', the 'first slot' is traced, and the respective wheel 33, 34 rolls along the 'first slot' keeping container 15 horizontal at all times, then the axis of the 'second slot' is the locus of the points at which the axis of respective wheel 34, 33 intersects inner plate 32.

Each slot 37, 38 comprises a vertical rear portion 39 having a substantially horizontal bottom end surface 40; a horizontal intermediate portion 41; and a downward-curving, preferably arc-shaped, front portion 42 having a substantially horizontal bottom end surface 43.

Since slots 37 and 38 together define path P, this also comprises a rear portion 39, an intermediate portion 41, and a front portion 42.

Close to where it is joined to the front end of respective intermediate portion 41, front portion 42 has an upward-facing radial appendix connecting front portion 42 to a respective hole 44 formed through inner plate 32 and larger than D in diameter.

In actual use, container 15 is fitted to vending machine 1 by opening door 9; inserting container 15 partly inside chamber 13, so that wheels 33 and 34 are positioned facing respective holes 44; moving container 15 perpendicularly to and towards lateral wall 5, so as to insert wheels 33 and 34 partly through respective holes 44 and position grooves 36 coplanar with inner plate 32; and, finally, moving container 15 so that wheels 33 and 34 engage respective slots 37, 38 and inner plate 32.

At this point, container 15 is rolled along slots 37, 38 into the lowered position (Figure 6), in which wheels 33, 34 rest on respective end surfaces 43 of front portions 42 of respective slots 37, 38, and top loading opening 20 is located outside chamber 13 of casing 2. Once container 15 in this position is either filled from the top with coffee beans or cleaned or serviced, it is raised, parallel to itself, and pushed towards rear wall 6 by rolling wheels 33, 34 along respective front portions 42 and intermediate portions 41 of respective slots 37, 38, and, finally, wheels 37, 38 are dropped along respective rear portions 39 to set container 15 into the raised work position, in which feed conduit 18 engages grinding device inlet 16. At this point, shutter 25, until now in the closed position, is moved into the open position, door 9 is closed, and coffee beverage vending machine 1 is ready to operate.

From the raised work position, container 15 is refilled and/or dismantled from casing 2 by performing the above operations in reverse.

In connection with the above, it should be pointed out that offsetting wheels 33 and 34 with respect to the vertical plane, with wheel 33 located above and set back with respect to wheel 34, generates a resisting moment capable of counterbalancing at any time the tipping moment to which container 15 is subjected as it is moved from the stably balanced raised work position, in which the container is connected to and supported by grinding device 14.

Another point to note is that, when container 15 is in the lowered loading position, top loading opening 20 is not only fully accessible from the top, with no obstacles whatsoever, but also 'ergonomically' located, i.e. at a height at which it is easily accessible by the filler.

## Claims

1. A coffee beverage vending machine (1) comprising an outer casing (2) with an access opening (8); and a coffee grinding device (14) and coffee grain container (15), both fitted to the outer casing (2); the grinding device (14) being housed in a fixed position inside the outer casing (2), and having a top coffee grain inlet (16); the coffee grain container (15) comprising a bottom feed conduit (18) for feeding coffee grains to said inlet (16), and at least one top loading opening (20); and the vending machine (1) being **characterized in that** the coffee grain container (15) is connected to the outer casing (2) to move, through the access opening (8) and along a given path (P), between a raised work position, in which the feed conduit (18) is connected to said inlet (16), and a lowered loading position, in which the feed conduit (18) is disconnected from said inlet (16) and the top loading opening (20) is located outside the outer casing (2).

2. A vending machine as claimed in Claim 1, and comprising coupling means (30) for connecting the coffee grain container (15) to the outer casing (2); and guide means (31) formed on the outer container (2) and engaged in rolling manner by the coupling means (30) to allow the coffee grain container (15) to move, with respect to the outer container (2), along the path (P).

3. A vending machine as claimed in Claim 2, wherein the coupling means (30) comprise two wheels (33, 34) fitted to the coffee grain container (15) and mounted to rotate about respective axes (35) crosswise to the path (P); each wheel (33; 34) having a first, outside, diameter (D), and an intermediate annular groove (36) having a second diameter (d) smaller than the first diameter (D); the guide means (31) comprising a support (32), and, for each wheel (33; 34), a slot (37; 38) formed on the support (32) and extending along the path (P); the support (32) engaging said intermediate annular grooves (36); and each slot (37; 38) being of constant width smaller than the first diameter (D) and larger than the second diameter (d) of the respective wheel (33; 34).

4. A vending machine as claimed in Claim 3, wherein each slot (37; 38) has a radial appendix connecting the slot (37; 38) to a respective hole (44) formed in the support (32) and larger in diameter than the first diameter (D).

5. A vending machine as claimed in Claim 3 or 4, wherein a first (33) of said wheels (33, 34) is located above a second (34) of said wheels (33, 34); the first wheel (33) being set back, inwards of said outer casing (2), with respect to a vertical plane through the axis (35) of the second wheel (34).

6. A vending machine as claimed in one of the foregoing Claims, wherein the outer casing (2) comprises a lateral wall (5) laterally bounding said access opening (8); the coffee grain container (15) being connected to and projecting from said lateral wall (5) by means of the coupling means (30); and the guide means (31) being formed on the lateral wall (5).

7. A vending machine as claimed in one of the foregoing Claims, wherein said path (P) comprises a first end portion (39) for connecting/disconnecting the feed conduit (18) to/from said inlet (16); an intermediate portion (41); and a downward-curving second end portion (42) adjacent to the access opening (8).

8. A vending machine as claimed in Claim 7, wherein the first end portion (39) is vertical.

## Patentansprüche

1. Kaffeegetränkeverkaufsautomat (1), umfassend ein äußeres Gehäuse (2) mit einer Zugangsöffnung (8); und eine Kaffeemahlvorrichtung (14) und einen Kaffeebohnenbehälter (15), die beide an dem äußeren Gehäuse (2) angebracht sind; wobei die Mahlvorrichtung (14) in einer festgelegten Position im Inneren des äußeren Gehäuses (2) untergebracht ist, und wobei sie einen oberen Kaffeebohnen-Einlass (16) aufweist; wobei der Kaffeebohnenbehälter (15) eine untere Zuführleitung (18) umfasst, um dem Einlass (16) Kaffeebohnen zuzuführen, und mindestens eine obere Ladeöffnung (20); und wobei der Verkaufsautomat (1) **dadurch gekennzeichnet ist, dass** der Kaffeebohnenbehälter (15) mit dem äußeren Gehäuse (2) derart verbunden ist, dass er sich durch die Zugangsöffnung (8) und entlang eines gegebenen Wegs (P) zwischen einer erhöhten Arbeitsposition, in der die Zuführleitung (18) mit dem Einlass (16) verbunden ist, und einer tiefer gelegenen Ladeposition, in der die Zuführleitung (18) von dem Einlass (16) getrennt ist und die obere Ladeöffnung (20) sich außerhalb des äußeren Gehäuses (2) befindet, bewegt.

2. Verkaufsautomat nach Anspruch 1, überdies umfassend Kopplungsmittel (30) zum Verbinden des Kaffeebohnenbehälters (15) mit dem äußeren Gehäuse (2); und Führungsmittel (31), die an dem äußeren Behälter (2) gebildet sind und in die die Kopplungsmittel (30) drehend eingreifen, um eine Bewegung des Kaffeebohnenbehälters (15) relativ zu dem äußeren Behälter (2) entlang des Pfads (P) zu ermöglichen.

3. Verkaufsautomat nach Anspruch 2, wobei die Kopplungsmittel (30) zwei Räder (33, 34) umfassen, die an dem Kaffeebohnenbehälter (15) angeordnet sind und derart gelagert sind, dass sie um jeweilige Achsen (35) quer zu dem Pfad (P) drehen; wobei jedes Rad (33; 34) einen ersten, äußeren Durchmesser (D) aufweist, und eine ringförmige Mittelrille (36), die einen zweiten Durchmesser (d) aufweist, der kleiner ist als der erste Durchmesser (D); wobei die Führungsmittel (31) einen Träger (32) umfassen, und für jedes Rad (33; 34) einen Schlitz (37; 38), der an dem Träger (32) gebildet ist und sich entlang des Pfads (P) erstreckt; wobei der Träger (32) in die ringförmigen Mittelrillen (36) eingreift; und wobei jeder Schlitz (37; 38) eine gleichbleibende Breite aufweist, die kleiner als der erste Durchmesser (D) und größer als der zweite Durchmesser (d) des jeweiliges Rads (33; 34) ist.

4. Verkaufsautomat nach Anspruch 3, wobei jeder Schlitz (37; 38) einen radialen Fortsatz aufweist, der den Schlitz (37; 38) mit einem jeweiligen Loch (44) verbindet, das in dem Träger (32) gebildet ist und einen Durchmesser aufweist, der größer ist als der erste Durchmesser (D).

5. Verkaufsautomat nach Anspruch 3 oder 4, wobei ein erstes (33) der Räder (33, 34) sich oberhalb eines zweiten (34) der Räder (33, 34) befindet; wobei das erste Rad (33) relativ zu einer vertikalen Ebene durch die Achse (35) des zweiten Rads (34) im äußeren Gehäuse (2) nach innen zurückgesetzt ist.

6. Verkaufsautomat nach einem der vorhergehenden Ansprüche, wobei das äußere Gehäuse (2) eine Seitenwand (5) umfasst, die die Zugangsöffnung (8) seitlich begrenzt; wobei der Kaffeebohnenbehälter (15) mittels der Kopplungsmittel (30) mit der Seitenwand (5) verbunden ist und von dort herausragt; und wobei die Führungsmittel (31) an der Seitenwand (5) gebildet sind.

7. Verkaufsautomat nach einem der vorhergehenden Ansprüche, wobei der Pfad (P) einen ersten Endabschnitt (39) zum Verbinden/Trennen der Zuführleitung mit/von dem Einlass (16) umfasst; einen Mittelabschnitt (41); und einen nach unten gebogenen zweiten Endabschnitt (42), der an die Zugangsöffnung (8) angrenzt.

8. Verkaufsautomat nach Anspruch 7, wobei der erste Endabschnitt (39) vertikal ist.

## Revendications

1. Machine distributrice de boisson au café (1) comprenant une enveloppe externe (2) avec une ouverture d'accès (8) ; et un dispositif de mouture de café (14) et un récipient de grains de café (15), tous deux étant installés sur l'enveloppe externe (2) ; le dispositif de mouture (14) étant logé en position fixe à l'intérieur de l'enveloppe externe (2), et ayant une admission haute de grains de café (16) ; le récipient de grains de café (15) comprenant un conduit d'alimentation bas (18) pour fournir des grains de café à ladite admission (16), et au moins une ouverture de chargement haute (20) ; et la machine distributrice (1) étant **caractérisée en ce que** le récipient de grains de café (15) est raccordé à l'enveloppe externe (2) pour se déplacer, à travers l'ouverture d'accès (8) et le long d'un trajet donné (P), entre une position de travail relevée, dans laquelle le conduit d'alimentation (18) est raccordé à ladite admission (16), et une position de chargement abaissée, dans laquelle le conduit d'alimentation (18) est déraccordé de ladite admission (16) et l'ouverture de chargement haute (20) est située à l'extérieur de l'enveloppe externe (2).

2. Machine distributrice selon la revendication 1, et comprenant un moyen d'accouplement (30) pour raccorder le récipient de grains de café (15) à l'enveloppe externe (2) ; et un moyen de guidage (31) formé sur le récipient extérieur (2) et enclenché de manière roulante par le moyen d'accouplement (30) pour permettre au récipient de grains de café (15) de se déplacer, par rapport au récipient extérieur (2), le long du trajet (P).

3. Machine distributrice selon la revendication 2, dans laquelle le moyen d'accouplement (30) comprend deux roues (33, 34) installées sur le récipient de grains de café (15) et montées pour tourner autour d'axes respectifs (35) en travers du trajet (P) ; chaque roue (33 ; 34) ayant un premier diamètre extérieur (D), et une gorge annulaire intermédiaire (36) ayant un second diamètre (d) plus petit que le premier diamètre (D) ; le moyen de guidage (31) comprenant un support (32), et, pour chaque roue (33 ; 34), une fente (37 ; 38) formée sur le support (32) et s'étendant le long du trajet (P) ; le support (32) enclenchant lesdites gorges annulaires intermédiaires (36) ; et chaque fente (37 ; 38) ayant une largeur constante plus petite que le premier diamètre (D) et plus grande que le second diamètre (d) de la roue respective (33 ; 34).

4. Machine distributrice selon la revendication 3, dans laquelle chaque fente (37 ; 38) a un appendice radial raccordant la fente (37 ; 38) à un trou respectif (44) formé dans le support (32) et de diamètre plus grand que le premier diamètre (D).

5. Machine distributrice selon la revendication 3 ou 4, dans laquelle une première (33) desdites roues (33, 34) est située au-dessus d'une seconde (34) desdites roues (33, 34) ; la première roue (33) étant en retrait, vers l'intérieur de ladite enveloppe externe (2), par rapport à un plan vertical à travers l'axe (35) de la seconde roue (34).

6. Machine distributrice selon l'une des revendications précédentes, dans laquelle l'enveloppe externe (2) comprend une paroi latérale (5) délimitant latéralement ladite ouverture d'accès (8) ; le récipient de grains de café (15) étant raccordé à et faisant saillie de ladite paroi latérale (5) grâce au moyen d'accouplement (30) ; et le moyen de guidage (31) étant formé sur la paroi latérale (5).

7. Machine distributrice selon l'une des revendications précédentes, dans laquelle ledit trajet (P) comprend une première partie d'extrémité (39) pour raccorder/déraccorder le conduit d'alimentation (18) à/de ladite admission (16) ; une partie intermédiaire (41) ; et une seconde partie d'extrémité s'incurvant vers le bas (42) adjacente à l'ouverture d'accès (8).

8. Machine distributrice selon la revendication 7, dans laquelle la première partie d'extrémité (39) est verticale.
